# EUROPEAN PATENT APPLICATION

(11) **EP 1 469 611 A2**
(43) Date of publication of application: **20.10.2004**
(21) Application number: 04008861.9
(22) Date of filing: 14.04.2004
(51) Int. Cl.: H04B 1/707

(54) **Rake reception method and apparatus**

(30) Priority: 15.04.2003 JP 2003110223
(71) Applicant: NEC CORPORATION, Tokyo (JP)
(72) Inventor: Ishii, Daiji, NEC Corporation, Tokyo (JP)
(74) Representative: VOSSIUS & PARTNER

(57) **Abstract**

A rake reception apparatus which receives and rake-combines spread signals on a path basis includes finger receivers (101-103), a switch (107), an adder (108); and a buffer (109). The finger receivers de-spread reception signals on a path basis. The switch sequentially selects de-spread data one by one on a path basis which are output from the plurality of finger receivers. The adder adds the data selected by the switch to a rake combining interim result corresponding to the data and outputs the result as a rake combining interim result after updating. The buffer holds the rake combining interim result output from the adder and outputs a rake combining interim result corresponding to data selected by the switch to the adder. A rake reception method is also disclosed.

## Description

The present invention relates to a rake reception method and apparatus and, more particularly, to a rake reception method and apparatus which receive and de-spread spread signals on a path basis, and rake-combine the resultant data.

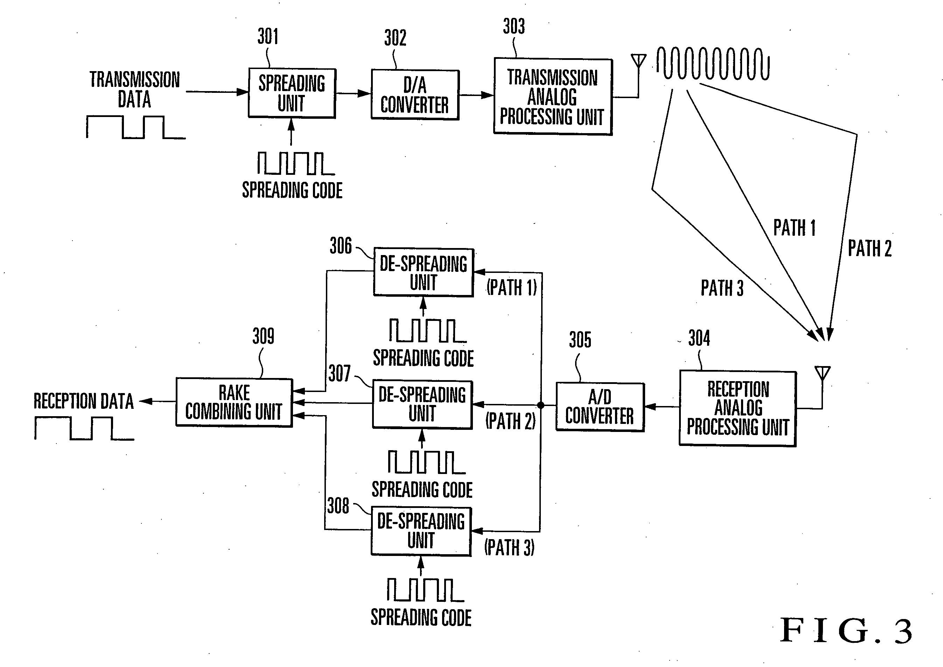

Recently, a great deal of attention has been paid to CDMA (Code Division Multiple Access) using a spread spectrum technique as a high-speed, large-capacity radio communication scheme. In this radio communication scheme, communication is performed by using a transmission apparatus and reception apparatus like those shown in Fig. 3.

The transmission apparatus is comprised of a spreading unit 301, D/A converter 302, and transmission analog processing unit 303. The reception apparatus is comprised of a reception analog processing unit 304, an A/D converter 305, de-spreading units 306, 307, and 308, and a rake combining unit 309.

On the transmission side, first of all, the spreading unit 301 performs spreading processing of multiplying transmission data by a wideband spreading code. The D/A converter 302 then converts the digital spread signal into an analog signal. The transmission analog processing unit 303 further converts the D/A-converted signal into a signal having a frequency in a high-frequency region, and transmits the frequency-converted signal to a propagation path. The signal transmitted in this manner reaches the reception side through a plurality of propagation paths (path 1, path 2, and path 3 in the case shown in Fig. 3) having different propagation delays.

On the reception side, first of all, the reception analog processing unit 304 converts the reception signal into a signal having a frequency in a low-frequency region. The A/D converter 305 then converts the analog signal converted into the low-frequency region into a digital signal. The reception digital signal obtained in this manner is the signal obtained by adding the signals received through the respective paths at different arrival timings. Each of the de-spreading units 306, 307, and 308 then performs de-spreading processing, which is reverse to spreading processing, by multiplying the reception signal by the spreading code in accordance with the arrival timing of the signal received through a corresponding one of the paths. With this operation, the data received through path 1, path 2, and path 3 are separated, respectively. Note that this spreading code is identical to that used on the transmission side. Finally, the rake combining unit 309 combines the data received through the respective paths, which are separated by de-spreading, thus obtaining desired reception data.

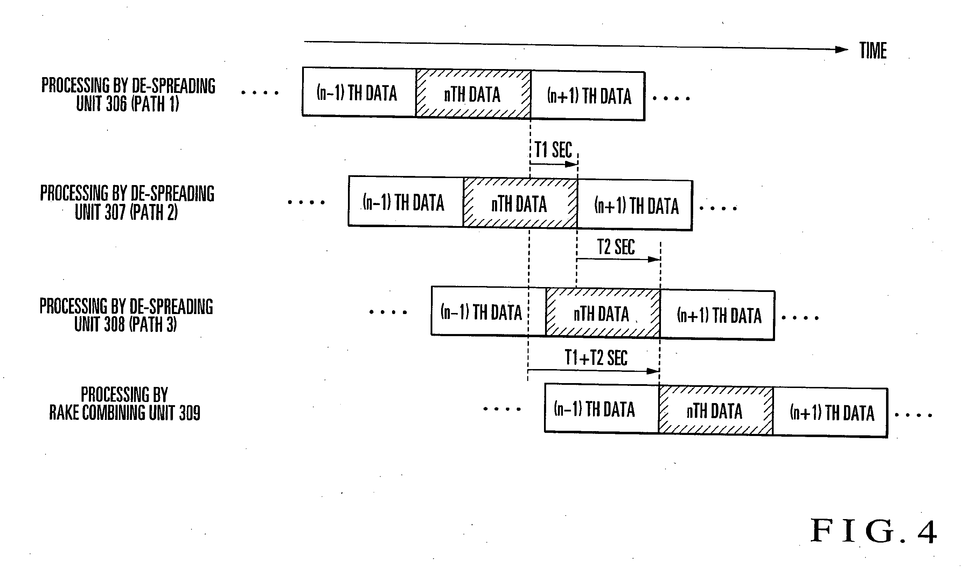

In the above de-spreading operation, since the arrival timings of data through the respective paths differ from each other, the end timings of de-spreading of data at the nth positions (n = 1, 2,...) (to be referred to as the nth data hereinafter) in path 1, path 2, and path 3 differ from each other. Assume that there is a time difference of T1 sec between the arrival timings of data through path 1 and path 2, and there is a time difference of T2 sec between the arrival timings of data through path 2 and path 3, as shown in Fig. 4. In this case, de-spreading of the nth data from path 2 ends with a delay of T1 sec with respect to the nth data from path 1, and de-spreading of the nth data from path 3 ends with a delay of T2 sec with respect to the nth data from path 2. In general, therefore, these data are rake-combined after their timings are adjusted. More specifically, rake combining of the nth data is started T1 + T2 sec after the end of the de-spreading of the nth data from path 1, at which the de-spreading of the nth data from path 3 ends.

As a scheme of rake-combining data upon performing timing adjustment in the above manner, a conventional scheme has been proposed (see, for example, Japanese Patent Laid-Open Nos. 10-209919 and 2001-345739), in which data from the respective paths after de-spreading are temporarily stored in a buffer, and the data are rake-combined when de-spreading of data from all the paths is completed.

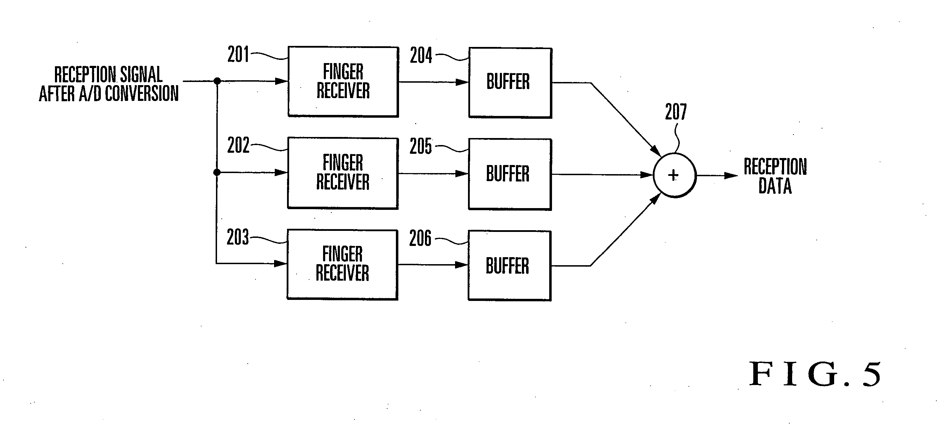

Fig. 5 shows the arrangement of a conventional rake reception apparatus. This conventional rake reception apparatus includes finger receivers 201, 202, and 203 which de-spread A/D-converted reception signals on a path basis, buffers 204, 205, and 206 for timing adjustment which temporarily hold the data from the respective paths which are de-spread by the finger receivers 201, 202, and 203, and an adder 207 which rake-combines the nth data (n = 1, 2,...) when the nth data from all the paths are held in the buffers.

Note that before the nth data from all the paths are held in the buffers 204, 205, and 206, the (n+1)th data, (n+2)th data,... are sequentially input to the buffers. The buffers 204, 205, and 206 are ring buffers, and hence after data is stored up to the end of each buffer, data storage is continued from the beginning of the buffer. It is therefore necessary for the nth data from the respective paths which are stored in the buffers 204, 205, and 206 to be held without being overwritten by succeeding data until the end of rake combining.

A number M of data that must be held in each of the buffers 204, 205, and 206 having such a ring buffer structure is obtained as follows. Letting W be the maximum time difference (second) between the arrival timings of data through the paths (which corresponds to the maximum time difference between the arrival timings of data through path 1 and path 3), and S be one data interval (second), then M is given by W/S. That is, a total number D of data that must be held in the buffers 204, 205, and 206 is given by D = F x M = F x W/S where F is the number of fingers, i.e., finger receivers.

The operation of this conventional reception apparatus will be described next. First of all, A/D-converted reception signals are input to the finger receivers 201, 202, and 203. Consider, for example, a case wherein the finger receivers 201, 202, and 203 de-spread data from path 1, data from path 2, and data from path 3, respectively. Assume that there is a time difference of T1 sec between the arrival timings of data through path 1 and path 2, and there is a time difference of T2 sec between the arrival timings of data through path 2 and path 3.

First of all, the nth data from path 1 is obtained by the finger receiver 201. This data is stored in the buffer 204. After T1 sec, the nth data from path 2 is obtained by the finger receiver 202. This data is stored in the buffer 205. After T2 sec, the nth data from path 3 is obtained by the finger receiver 203. This data is stored in the buffer 206. When the nth data from all the paths are stored, these data are read out from the buffers 204, 205, and 206 to be added by the adder 207, thereby obtaining reception data at the nth position (to be referred to as the nth reception data hereinafter). Subsequently, similar processing is performed for the (n+1)th reception data, (n+2)th reception data,....

The conventional rake reception apparatus described above can obtain one reception data upon eliminating the time differences between the reception signals separately received through a plurality of paths. As described above, however, in the above conventional rake reception apparatus, since the total number of data that must be held to adjust the timings of the data is given by D = F x W/S, the total capacity of the buffers undesirably increases as the number F of fingers increases.

The present invention has been made to solve the above problem in the prior art, and has as its object to reduce the total capacity of a buffer which is required to adjust the timings of data.

In order to achieve the above object, according to the present invention, there is provided a rake reception apparatus which receives and rake-combines spread signals on a path basis, comprising a plurality of finger rreceivers which de-spread reception signals on a path basis, a switch which sequentially selects de-spread data one by one on a path basis which are output from the plurality of finger receivers, an adder which adds the data selected by the switch to a rake combining interim result corresponding to the data and outputs the result as a rake combining interim result after updating, and a buffer which holds the rake combining interim result output from the adder and outputs a rake combining interim result corresponding to data selected by the switch to the adder.

In addition, according to the present invention, there is provided a rake reception method of receiving and rake-combining spread signals on a path basis, comprising the step of de-spreading reception signals on a path basis, the step of sequentially selecting de-spread data one by one on a path basis, and the step of adding selected data to a rake combining interim result corresponding to the data, and outputting the result as a rake combining interim result after updating.

An embodiment of the present invention will be described in detail hext with reference to the accompanying drawings.
Fig. 1 is a block diagram showing the arrangement of a rake reception apparatus according to an embodiment of the present invention;
Fig. 2 is a timing chart showing an example of the operation of the rake reception apparatus according to the embodiment of the present invention;
Fig. 3 is a block diagram showing a sequence in a CDMA radio communication scheme;
Fig. 4 is a timing chart showing timing adjustment in rake combining; and
Fig. 5 is a block diagram showing the arrangement of a conventional rake reception apparatus.

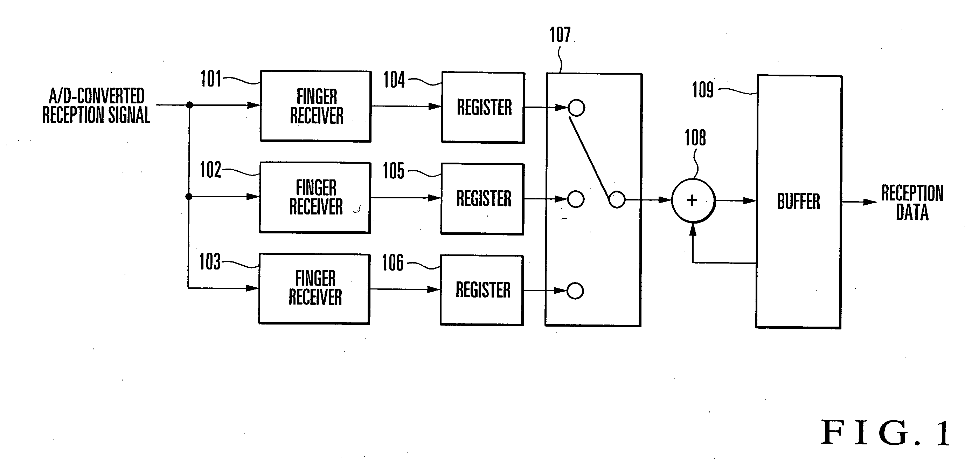

Fig. 1 shows the arrangement of a rake reception apparatus according to an embodiment of the present invention. The rake reception apparatus of this embodiment includes finger receivers 101, 102, and 103, registers 104, 105, and 106, a switch 107, an adder 108, and a buffer 109.

The finger receivers 101, 102, and 103 de-spread A/D-converted reception signals on a path basis, and output the de-spread data.

The register 104 temporarily holds the de-spread data output from the finger receiver 101 on a path basis. Likewise, the registers 105 and 106 temporarily hold the de-spread data output from the finger receivers 102 and 103, respectively, on a path basis.

The switch 107 receives the data output from the registers 104, 105, and 106, and sequentially selects and outputs the data one by one.

The adder 108 receives the data output from the switch 107 and the rake combining interim result output from the buffer 109, and outputs the addition result of these data as a rake combining interim result after updating to the buffer 109.

The buffer 109 holds the rake combining interim result output from the adder 108. In addition, the rake combining interim result corresponding to the data output from the switch 107 to the adder 108 is output to the adder 108. Of the plurality of rake combining interim results held, the rake combining interim result corresponding to the end of the addition of data from all the paths is output as a rake combining result.

More specifically, the buffer 109 in this embodiment is a ring buffer. If the maximum time difference between the arrival timings of data through paths is W sec, and one data interval is S sec, the number of rake combining interim results that must be held in the buffer 109 is W/S. Therefore, the buffer 109 has at least W/S registers.

Since the arrival timings of data through the respective paths are determined in advance, the order of the data numbers of data output from the switch 107 to the adder 108 is determined by causing the switch 107 to select the data from the respective paths, i.e., the output data from the registers 104 to 106, in a predetermined order. By accessing the register of the buffer 109 in accordance with this order, rake combining interim results of data numbers corresponding to the data output to the adder 108 are read out to the adder 108. The adder 108 adds the data of the same data numbers as these numbers and the rake combining interim results. The addition result is written as a rake combining interim result in the original register of the buffer 109, thus updating the contents of the register.

The operation of the rake reception apparatus according to this embodiment will be described next with reference to Fig. 1.

Consider a case wherein the finger receivers 101, 102, and 103 de-spread data from path 1, data from path 2, and data from path 3, respectively. However, the respective finger receivers arbitrarily de-spread data from the respective paths. Assume that the operating clock frequency in this embodiment is Z times the chip rate, i.e., the rate of a spreading code. Letting SF be a spreading ratio, which is the number of chips in a spreading code per data interval, and F be the number of fingers, i.e., the number of finger receivers, then Z = CEIL{F + 1)/SF} where CEIL{Y} indicates an integer equal to or larger than Y and smaller than Y + 1.

The finger receiver 101 obtains data from path 1 by de-spreading an input A/D-converted reception signal. The finger receiver 101 then stores the de-spread data in the register 104. If the spreading ratio is SF, and the operating clock frequency is Z times the chip rate, de-spread data is output every SF x Z cycles of operating clocks. For this reason, the register 104 holds de-spread data over X = SF x Z cycles.

The finger receiver 102 obtains data from path 2 by de-spreading an input A/D-converted reception signal. The finger receiver 102 then stores the de-spread data in the register 105. The register 105 holds the de-spread data over X cycles.

The finger receiver 103 obtains data from path 3 by de-spreading an input A/D-converted reception signal. The finger receiver 103 then stores the de-spread data in the register 106. The register 106 holds the de-spread data over X cycles.

By repeating the above series of operations at intervals of X cycles, the data held in the register 104 are rake-combined, and so are the data in the register 105 and the data in the register 106.

In the first cycle, the data held in the register 104 is selected by the switch 107. The data from path 1 which is selected by the switch 107 is added to the value "0" by the adder 108. This addition result is then stored as a rake combining interim result in the buffer 109. Note that since the data from path 1 is the first data in rake combining operation, the data is stored in the buffer 109 without any change by being added to the value "0".

In the next cycle, the data held in the register 105 is selected by the switch 107. The adder 108 adds the data from path 2 which is selected by the switch 107 to the rake combining interim result which is output from the buffer 109 and corresponds to the data. The adder 108 then stores this addition result as a new rake combining interim result in the buffer 109.

In the next cycle, the data held in the register 106 is selected by the switch 107. The adder 108 adds the data from path 3 which is selected by the switch 107 to the rake combining interim result which is output from the buffer 109 and corresponds to the data. The adder 108 then stores this addition result as a new rake combining interim result in the buffer 109.

In the next cycle, the buffer 109 outputs the rake combining interim result of the data from all the paths which have been added by the processing in the preceding cycles as the rake combining result of the data.

Since the arrival timings of the data through the respective paths differ from each other, the data numbers selected by the switch 107 are not necessarily the same.

The operation of the rake reception apparatus according to this embodiment will be described next by using specific numbers with particular emphasis being placed on rake combining operation.

If, for example, the spreading ratio is given by SF = 4 and the finger count is given by F = 3, Z = CEIL{(3 + 1)/4) = 1, and operating clock frequency = chip rate. In addition, as described above, since the data holding cycles in the registers 104 to 106 are given by X = SF x Z, X = 4 x 1 = 4.

In the following description, let A(n) be the nth data from path 1, A(n - 1) be the (n-1)th data,..., B(n) be the nth data from path 2, B(n - 1) be the (n-1)th data,..., C(n) be the nth data from path 3, and C(n - 1) be the (n-1)th data.

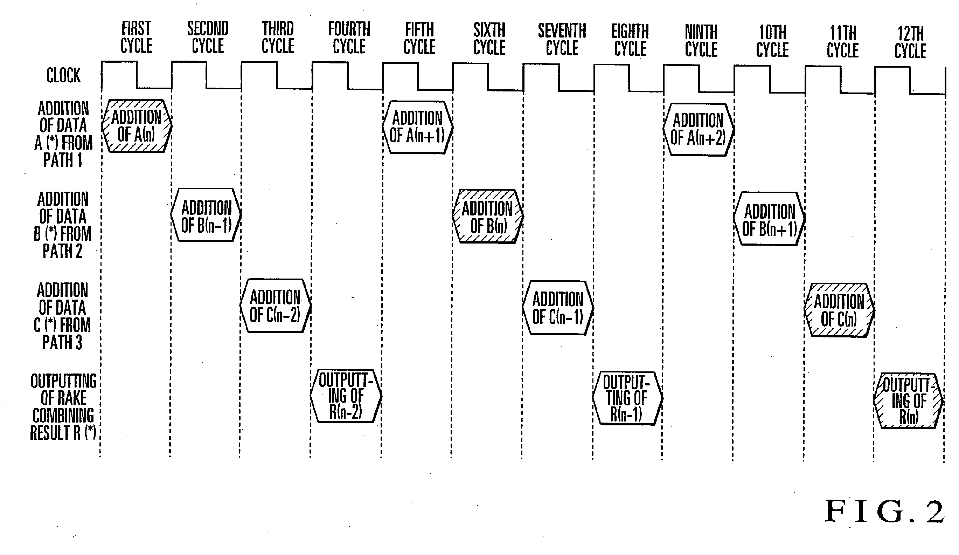

In the first cycle in Fig. 2, the adder 108 adds the nth data A(n) from path 1 which is selected by the switch 107 to the value "0". The adder 108 then stores this addition result as the rake combining interim result of the nth data in the buffer 109. At this time, the value of the rake combining interim result of the nth data is A(n).

In the second cycle, the adder 108 adds the (n-1)th data B(n - 1) from path 2 which is selected by the switch 107 to the rake combining interim result of the (n-1)th data output from the buffer 109. The adder 108 then stores this addition result as the new rake combining interim result of the (n-1)th data in the buffer 109. At this time, the value of the rake combining interim result of the (n-1)th data is A(n - 1) + B(n - 1).

In the third cycle, the adder 108 adds the (n-2)th data C(n - 2) from path 3 which is selected by the switch 107 to the rake combining interim result of the (n-2)th data output from the buffer 109. The adder 108 then stores this addition result as the new rake combining interim result of the (n-2)th data in the buffer 109. At this time, the value of the rake combining interim result of the (n-2)th data is A(n - 2) + B(n - 2) + C(n - 2).

Table 1 given below shows the data stored in the buffer 109 at this point of time.

**Table 1**

| Data Number | Rake Combining Interim Result |
|---|---|
| n+1 | 0 |
| n | A(n) |
| n-1 | A(n - 1) + B(n - 1) |
| n-2 | A(n -2) + B(n - 2) + C(n - 2) |
| . | . |
| . | . |
| . | . |

In the fourth cycle, the buffer 109 outputs the rake combining interim result of the (n-2)th data calculated in the third cycle as the rake combining result R(n - 2) of the (n-2)th data.

In the fifth cycle, the adder 108 adds the (n+1)th data A(n + 1) from path 1 which is selected by the switch 107 to the value "0". The adder 108 then stores this addition result as the rake combining interim result of the (n+1)th data in the buffer 109. At this time, the value of the rake combining interim result of the (n+1)th data is A(n + 1).

In the sixth cycle, the adder 108 adds the nth data B(n) from path 2 which is selected by the switch 107 to the rake combining interim result of the nth data output from the buffer 109. The adder 108 then stores this addition result as the new rake combining interim result of the nth data in the buffer 109. At this time, the value of the rake combining interim result of the nth data is A(n) + B(n).

In the seventh cycle, the adder 108 adds the (n-1)th data C(n - 1) from path 3 which is selected by the switch 107 to the rake combining interim result of the (n-1)th data output from the buffer 109. The adder 108 then stores this addition result as the new rake combining interim result of the (n-1)th data in the buffer 109. At this time, the value of the rake combining interim result of the (n-1)th data is A(n - 1) + B(n - 1) + C(n - 1).

In the eighth cycle, the buffer 109 outputs the rake combining interim result of the (n-1)th data calculated in the seventh cycle as the rake combining result R(n - 1) of the (n-1)th data.

In the ninth cycle, the adder 108 adds the (n+2)th data A(n + 2) from path 1 which is selected by the switch 107 to the value "0". The adder 108 then stores this addition result as the rake combining interim result of the (n+2)th data in the buffer 109. At this time, the value of the rake combining interim result of the (n+2)th data is A(n + 2).

In the 10th cycle, the adder 108 adds the (n+1)th data B(n + 1) from path 2 which is selected by the switch 107 to the rake combining interim result of the (n+1)th data output from the buffer 109. The adder 108 then stores this addition result as the new rake combining interim result of the (n+1)th data in the buffer 109. At this time, the value of the rake combining interim result of the (n+1)th data is A(n + 1) + B(n + 1).

In the 11th cycle, the adder 108 adds the nth data C(n) from path 3 which is selected by the switch 107 to the rake combining interim result of the nth data output from the buffer 109. The adder 108 then stores this addition result as the new rake combining interim result of the nth data in the buffer 109. At this time, the value of the rake combining interim result of the nth data is A(n) + B(n) + C(n).

In the 12th cycle, the buffer 109 outputs the rake combining interim result of the nth data calculated in the 11th cycle as the rake combining result R(n) of the nth data.

According to the above description, rake combining for the (n-2)th data is performed in the third and fourth cycles; rake combining for the (n-1)th data, in the second, seventh, and eighth cycles; rake combining for the nth data, in the first, sixth, 11th, and 12th cycles; rake combining for the (n+1)th data, in the fifth and 10th cycles; and rake combining for the (n+2)th data, in the ninth cycle. In this manner, the (n-2)th data, (n-1)th data, nth data, (n+1)th data, (n+2)th data,... are sequentially rake-combined.

This embodiment has exemplified the case wherein the finger count F is three, which is the number of finger receivers. However, the present invention is not limited to this, and can be equally applied to a case wherein the finger count is set to an arbitrary value other than three.

In addition, this embodiment has exemplified the case wherein the buffer 109 outputs the rake combining interim result after the end of the addition of data from all the paths as a rake combining result. However, the rake combining interim result output from the buffer 109 to the adder 108 may also be output to an external apparatus to allow the apparatus to identify the rake combining interim result after the end of the addition of data from all the paths as a rake combining result.

In this case, the buffer capacity in the prior art will be compared with that in this embodiment. In the prior art, letting F be the number of finger receivers, F buffers, each for holding W/S data, are required, as described above. Therefore, a total number D₁ of data to be held in the buffers becomes F x W/S. In contrast, in this embodiment, since a buffer for holding W/S rake combining interim results and F registers are required, a total number D₂ of data becomes W/S + F. If, for example, W = 4.16 x 10⁻⁵ (sec), S = 1.04 x 10⁻⁶ (sec), and F = 6, then D₁ = 240 and D₂ = 46. As is obvious from this example, the total buffer capacity in this embodiment can be reduced as compared with that in the prior art.

As has been described above, the rake combining apparatus of this embodiment adds the nth data from each path to a rake combining interim result when the data is de-spread instead of performing rake combining after the nth data from all the paths are de-spread. For this reason, there is no need to prepare buffers equal in number to finger receivers. Instead, only one common buffer which holds rake combining interim results needs to be prepared. This makes it possible to greatly reduce the total buffer capacity.

## Claims

1. A rake reception apparatus which receives and rake-combines spread signals on a path basis, **characterized by** comprising:
a plurality of finger receivers (101 - 103) which de-spread reception signals on a path basis;
a switch (107) which sequentially selects de-spread data one by one on a path basis which are output from said plurality of finger receivers;
an adder (108) which adds the data selected by said switch to a rake combining interim result corresponding to the data and outputs the result as a rake combining interim result after updating; and
a buffer (109) which holds the rake combining interim result output from said adder and outputs a rake combining interim result corresponding to data selected by said switch to said adder.

2. An apparatus according to claim 1, wherein said buffer outputs, as a rake combining result, a rake combining interim result after addition of data from all paths which are to be rake-combined.

3. An apparatus according to claim 1 or 2, further
comprising a plurality of registers (104 - 106) which respectively hold de-spread data on a path basis which are output from said finger receivers,
wherein said switch sequentially selects the data held in said plurality of registers.

4. An apparatus according to claim 3, wherein said switch sequentially selects the data held in said plurality of registers at intervals of cycles equal in number to a sum obtained by adding one to the number of fingers which is equal in number to said finger receivers.

5. An apparatus according to claim 1, 2, 3 or 4, wherein
said buffer holds rake combining interim results equal in number to a quotient obtained by dividing a maximum time difference between arrival timings of data through paths by one data interval.

6. A rake reception method of receiving and rake-combining spread signals on a path basis, **characterized by** comprising:
the step of de-spreading reception signals on a path basis;
the step of sequentially selecting de-spread data one by one on a path basis; and
the step of adding selected data to a rake combining interim result corresponding to the data, and outputting the result as a rake combining interim result after updating.

7. A method according to claim 6, further comprising the step of outputting, as a rake combining result, a rake combining interim result after addition of data from all paths which are to be rake-combined.

8. A method according to claim 6 or 7, further
comprising the step of holding de-spread data on a path basis, and
the step of sequentially selecting includes the step of sequentially selecting the held data.

9. A method according to claim 8, wherein
the step of de-spreading includes the step of de-spreading reception signals on a path basis by using a plurality of finger receivers (101 -103), and
the step of sequentially selecting includes the step of sequentially selecting the held data at intervals of cycles equal in number to a sum obtained by adding one to the number of fingers which is equal in number to said finger receivers.
